**Europäisches Patentamt**

**European Patent Office**

**Office européen des brevets**

(19)

(11) **EP 1 428 899 A1**

(12) # EUROPEAN PATENT APPLICATION

(43) Date of publication:
**16.06.2004 Bulletin 2004/25**

(51) Int Cl.7: **C23C 4/10**, C23C 28/00

(21) Application number: **03028411.1**

(22) Date of filing: **11.12.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **13.12.2002 IT RM20020622**

(71) Applicant: **CENTRO SVILUPPO MATERIALI S.p.A.**
**00128 Roma (IT)**

(72) Inventor: **Tului, Mario**
**Via di Castel Romano 100 00128 Roma (IT)**

(74) Representative: **Gervasi, Gemma, Dr.**
**Notarbartolo & Gervasi S.p.A.,**
**Corso di Porta Vittoria, 9**
**20122 Milano (IT)**

(54) **PROCESS FOR THERMAL PLASMA SPRAYING OF DOPED SEMICONDUCTOR OXIDE-BASED COATINGS**

(57)     A process for the preparation of a composite multilayer product with selective optical properties comprises the operation of depositing, by thermal plasma spraying of powders, a coating of semiconductor oxides doped with oxides of elements chosen from the group consisting of transition metals and metals in the groups III-A and V-A of the periodic table of elements, in which the coating obtained maintains the composition and doping of the thermal plasma sprayed powders substantially unchanged. The figure shows the X-ray diffraction spectrum of a coating deposited according to the process of the present invention.

FIG. 7

**EP 1 428 899 A1**

**Description**

The present invention refers to the sector of preparation of products with low emissivity in the infrared field and low reflectivity in the visible field, with application in the aeronautical and energy sectors.

As is known, in the case of coated products, the coating in question must have a high adhesion and must be able to withstand transitory mechanical-thermal stress that could cause detachment.

A solution currently adopted is based on special paints containing particles of material with the required optical behaviour. However, the use of said paints is not considered wholly satisfactory. In fact, when exposed to service conditions, these paints tend to rapidly deteriorate and erode and consequently their properties tend to rapidly degrade. These paints therefore have to be frequently renewed. An example of the above type of coating is described in the United States patent US 5.472.533.

Evolution of the state of the art has brought to light another type of coating: (doped) semiconductor oxide coating.

The deposit of these oxides has, however, been confined to methods that operate at relatively low temperatures, such as the PVD (Phase Vapour Deposition) evaporation technology, in the Sputtering version.

In this specific sector, in fact, there is the technical preconception that by adopting thermal plasma spraying, with work temperatures around 10,000°K, the composition and doping of the coating obtained are different from those of the original powder chosen for the thermal plasma spraying.

The present invention overcomes this technical preconception, also offering further advantages that will become evident below.

The present invention concerns a process for the preparation of a composite multilayer product with selective optical properties, comprising the stage of depositing, by thermal plasma spraying of powders, a semiconductor oxide coating doped with oxides of elements chosen from the transition metals and metals in the groups III-A and V-A of the periodic table of elements, and in which the coating obtained maintains the composition and doping of the thermal plasma spray powders substantially unchanged.

The coatings deposited can have a composition chosen from the group consisting of indium oxide doped with stannous oxide and/or cadmium oxide, zinc oxide doped with aluminium oxide and/or indium oxide, stannous oxide doped with antimony oxide and/or zinc oxide and/or fluorine, cadmium oxide doped with stannous oxide and their combinations.

In particular the coatings deposited can have a composition chosen from the group consisting in indium oxide doped up to 15% with stannous oxide and/or up to 5% with cadmium oxide, zinc oxide doped up to 5% with aluminium oxide and/or up to 5% with indium oxide, stannous oxide doped up to 10% with antimony oxide and/or up to 35% with zinc oxide and/or with fluorine as the F/Sn ratio is between 0.15 and 0.30, and cadmium oxide doped up to 35% with stannous oxide.

In some embodiments of the present invention, coatings are deposited with a composition chosen from the group consisting of indium oxide doped with 10% stannous oxide (ITO), indium oxide doped with cadmium oxide (ICO), zinc oxide doped with 2% aluminium oxide (AZO), zinc oxide doped with indium oxide (IZO), stannous oxide doped with approximately 3% antimony oxide (ATO), stannous oxide doped with percentages of zinc oxide ranging from 10 to 35% (ZTO), stannous oxide doped with fluorine according to a ratio F:Sn = 0.25 (FTO) and cadmium oxide doped with 33% stannous oxide (CTO).

The low density structural material, on which the deposit is performed, can be chosen from the group consisting of aluminium, aluminium alloys, titanium, titanium alloys, composite products with polymeric matrix or composite products with carbon fibres.

The composite product with carbon fibres can be of the C-C or C-SiC type.

The low density high thermal resistance material on which the deposit is performed can be a composite product with carbon fibres. The composite product with carbon fibres can be of the C-C or C-SiC type.

The high thermal resistance structural material on which the deposit is performed can be chosen from the group consisting of steel and superalloys of nickel and cobalt.

According to the process of the present invention, an intermediate layer can be deposited between the base and the doped semiconductor oxide coating.

The intermediate layer can be chosen from the group comprising metals such as titanium, nickel, aluminium, chromium, iron, cobalt, silicon, yttrium and their respective alloys, oxides of metals such as titanium, nickel, aluminium, chromium, iron, cobalt, silicon, yttrium, if necessary doped with elements such as tin, aluminium, antimony, fluorine, and combinations of said metals and oxides.

The main advantage of the process according to the present invention lies in the fact that it permits the deposition of material with the required optical properties, able to weld permanently to its support.

The composite multilayer product obtained with the process according to the invention has a number of uses.

For example it can be used when it is necessary to limit the transmission of heat by radiation, as with machine components, mechanical or electronic devices and instruments which, during their working life, are subject to heating. In these cases a high emissivity in the infrared field could affect the operation of devices and instruments adjacent to those subject to heating.

Use of these composite multilayer products is also envisaged in situations where it is necessary to prevent, especially in restricted spaces, the onset of the greenhouse effect, determined by solar and artificial lighting, accompanied by an uncontrolled increase in the temperature in that area.

Another sector of application concerns components which, in their working life, are subject to friction, in particular friction with the air. This occurs on the outer surface of vehicles or their parts that move fast in the air and are subject to friction. The local increase in temperature can determine a high emission of waves in the infrared field and can disturb adjacent electric or electronic instruments and/or permit identification of the vehicle by surveillance systems and/or missile guide tracking systems.

In the above context, the need to obtain low emissivity of the infrared field can be accompanied by the need to obtain low reflectivity in the visible field near the infrared field, for example to prevent the reflection of external sources, natural or artificial, contributing to identification of the vehicle by surveillance systems and/or missile guide tracking systems.

Application of the composite product according to the invention is particularly suitable for the surfaces of an aircraft most subject to aerodynamic heating such as the connection edges of the wing and control surfaces, the front of the fuselage and the air intakes.

With the composite product obtained by means of the process of the present invention, solar energy converters can also be produced for applications in the building trade (walls that retain the heat) or in the field of energy production.

So far a general description of the present invention has been provided. With the help of the figures and the examples, a more detailed description will now be given of its forms of embodiment for a better understanding of its purposes, characteristics, advantages and modes of application.

Figure 1 shows a micrograph of 3% zinc oxide in $Al_2O_3$ after thermal treatment.

Figures 2 and 3 show two micrographs of 3% zinc oxide in $Al_2O_3$ sprayed in air, at two different magnifications.

Figures 4 and 5 show the X-ray crystallograms of 3% and 22% zinc oxide in $Al_2O_3$ respectively, after thermal treatment.

Figures 6 and 7 show the X-ray crystallograms of the coatings obtained by air thermal spraying, on steel substrates, of the powders of 3% and 22% zinc oxide in $Al_2O_3$ respectively.

Figure 8 shows the emissivity in the infrared field of the same two samples of coating compared with the emissivity of the non-doped zinc oxide.

EXAMPLE

In the example zinc oxide doped with aluminium oxide is used as the coating material. This material is not expensive and its optical properties are well-known. Its reflectivity depends on the concentration of aluminium atoms present in the ZnO reticulum.

In preparation of the AZO, $Al_2O_3$ was used instead of Al to avoid problems that can occur with the use of a fine pyrophoric metallic powder.

Two different concentrations of $Al_2O_3$ in the ZnO matrix were investigated: the 3% concentration in weight, because the corresponding Al content has very low emissivity values in the infrared field, and the 22% concentration in weight, because this percentage corresponds to the eutectic composition in the $ZnO-Al_2O_3$ phase diagram (the presence of the eutectic composition guarantees much better uniformity of the doped coating, since it forms during thermal plasma spraying while the materials are completely melted).

The coating materials to be sprayed are prepared by mixing in water, until a sludge forms, fine powders of ZnO and $Al_2O_3$ with mean grain diameter of 1.0 µm and 0.5 µm respectively. The mixtures were then agglomerated using a Spray Dryer.

The agglomeration parameters are shown in Table 1.

Table 1 -

| Agglomeration parameters | | | |
|---|---|---|---|
| **Sludge parameters** | | **Spray Drying parameters** | |
| binder (g/l) | 40 | blower (%) | 100 |
| dispersion means (g/l) | 30 | compressor (%) | 50 |

Table 1 - (continued)

| Agglomeration parameters | | | |
|---|---|---|---|
| **Sludge parameters** | | **Spray Drying parameters** | |
| $H_2O$ (g) | 1000 | pump (%) | 30 |
| ZnO + $Al_2O_3$ (g/l) | 1000 | int. temperature (°C) | 250 |
| | | ext. temperature (°C) | 150 |

The agglomerated powders were treated thermally at 1300°C for six hours.

For the deposition experiments an apparatus is used comprising an 80 kW plasma torch installed in a pressure chamber which permits control of the pressure and composition of the atmosphere during spraying.

The coating materials are sprayed, after thermal treatment, on steel substrates.

Deposit on steel substrates is performed in APS and IPS (Inert gas Plasma Spray), using the parameters shown in Table 2.

Table 2 -

| Spraying parameters used for deposit on steel substrates | | | | | |
|---|---|---|---|---|---|
| Mode | Atmosphere | Power | Plasma gas | | Transport gas |
| | (bar) | (W) | (slpm*) | | (slpm*) |
| APS | Air | 54 | Ar (55) (14) | $H_2$ | Ar (3.5) |
| IPS | Ar/900 bar | 54 | Ar (55) (14) | $H_2$ | Ar (3.5) |

* Standard litres per minute

Samples of powder, incorporated in resin, were observed by means of SEM (Scanning Electron Microscopy). Distribution of the elements was analysed by means of EDS (Energy Dispersion Spectroscopy) and EPMA (Electron Microprobe Analysis). The transverse sections of coated samples were also observed via SEM, EDS and EPMA.

XRD (X-ray diffraction) analyses were performed on the samples of powders and coatings.

The surface of some coated samples was ground.

The reflectivity of the coated and ground samples was measured in the range 0.3-2.5 $\mu$m by means of a spectrophotometer. The spectral emissivity of the same samples was measured in the range 1.6-15.0 $\mu$m by means of direct comparison with the energy emitted by a black body at the same temperature. To compare the results obtained with the two methods, the emissivity in the range 0.3-2.5 $\mu$m was calculated by means of the following relation, valid for non-transparent bodies:

$$\varepsilon + R = 1$$

where $\varepsilon$ is the emissivity and R the reflectivity.

The samples of powder and coating were identified in the following figures and tables according to the nominal starting composition and the process stage. The agglomerated powders show a mean grain diameter of approximately 80 $\mu$m, which remains substantially unchanged after thermal treatment.

The SEM analyses show that ZnO and $Al_2O_3$ are well mixed in the agglomerated powders. After thermal treatment, grains up to a diameter of 10 $\mu$m can be observed inside individual particles.

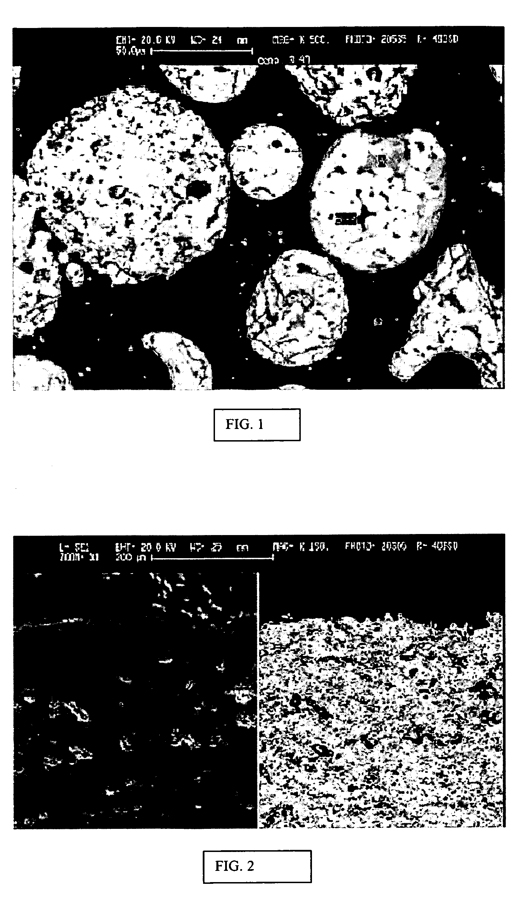

As an example, figure 1 shows a micrograph of powder with 3% $Al_2O_3$, after thermal treatment. The EDS analyses reveal that the white grains observed inside the particles consist basically of ZnO; the slightly grey phase is a mixed zinc and aluminium oxide.

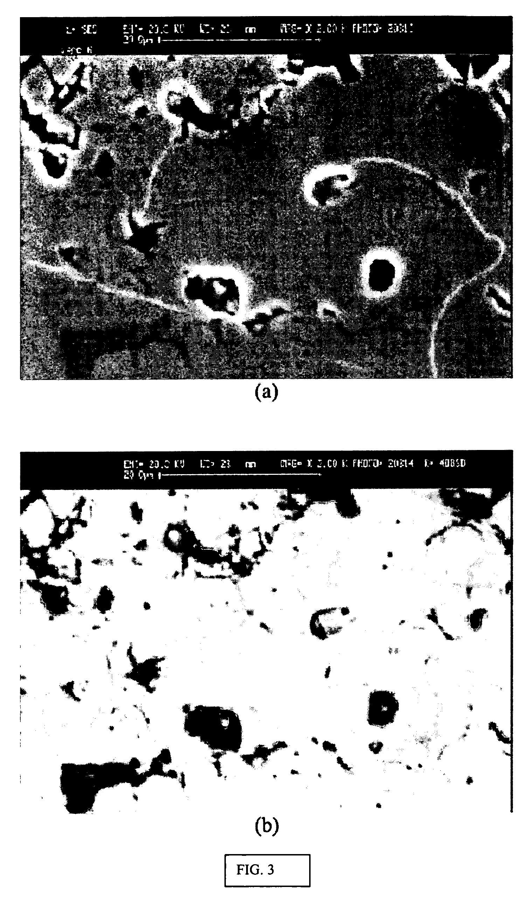

As an example, figures 2 and 3 show two micrographs of coating with 3% $Al_2O_3$ sprayed in air, at two different magnifications. The high magnification micrograph shows the same morphology as the thermally treated powder, i.e. , white grains in a light grey matrix.

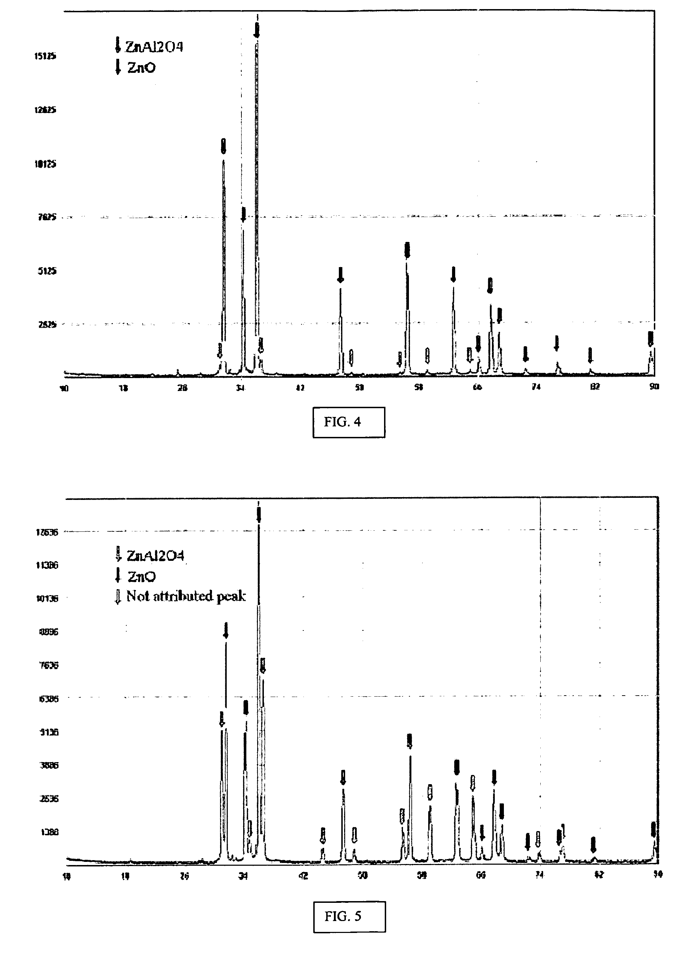

The XRD spectrums show that ZnO and $\alpha$-$Al_2O_3$ are present in the agglomerated powder. After thermal treatment, the ZnO and $ZnAl_2O_4$ phases are present. The peaks of $\alpha$-$Al_2O_3$ have disappeared. As an example, figures 4 and 5 show the XRD spectrums of ZnO at 3% in $Al_2O_3$ and at 22% in $Al_2O_3$, respectively, after thermal treatment.

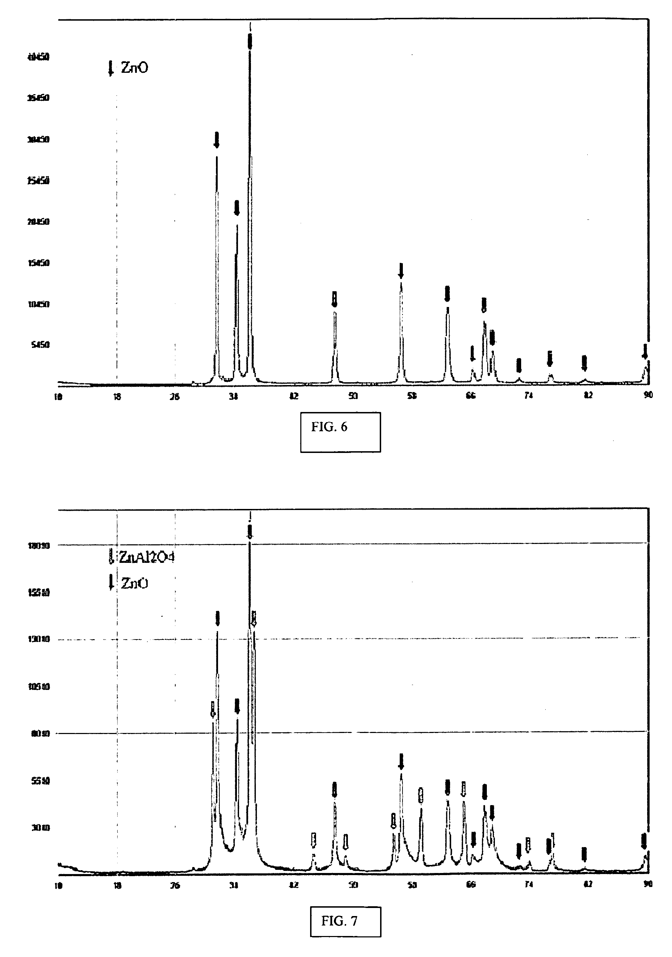

Figures 6 and 7 show the XRD spectrums of the coatings obtained by spraying in air, on steel substrates, the coating materials obtained respectively from the mixtures at 3% in $Al_2O_3$ and at 22% in $Al_2O_3$.

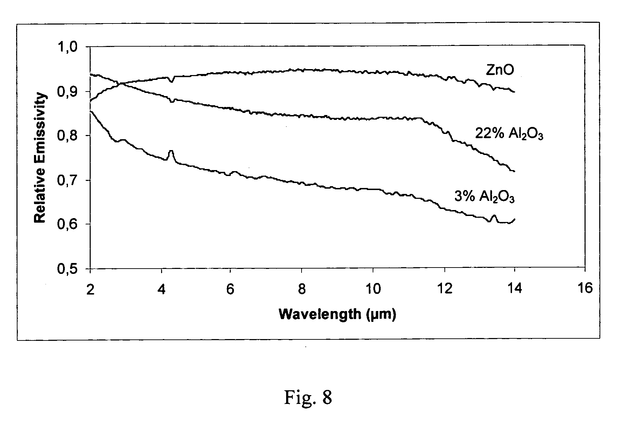

Figure 8 shows the emissivity in the infrared field of the same two samples of coating compared with the emissivity of the non-doped zinc oxide.

**Claims**

1. Process for the preparation of a composite multilayer product with selective optical properties, **characterised in that** it comprises the stage of depositing by thermal plasma spraying of powders, on a base made of structural material with low density and/or high thermal resistance, a coating of semiconductor oxides, doped with oxides of elements chosen from the transition metals and metals in groups III-A and V-A of the periodic table of elements so that the coating obtained maintains the composition and doping of the thermal plasma sprayed powders substantially unchanged.

2. Process for the preparation of a composite multilayer product with selective optical properties as in claim1, in which coatings with a composition chosen from the following are deposited: indium oxide doped with stannous oxide and/or cadmium oxide, zinc oxide doped with aluminium oxide and/or indium oxide, stannous oxide doped with antimony oxide and/or zinc oxide and/or fluorine, cadmium oxide doped with stannous oxide, and their combinations.

3. Process for the preparation of a composite multilayer product with selective optical properties as in claim 2, in which coatings with a composition chosen from the following are deposited: indium oxide doped up to 15% with stannous oxide and/or up to 5% with cadmium oxide, zinc oxide doped up to 5% with aluminium oxide and/or up to 5% with indium oxide, stannous oxide doped up to 10% with antimony oxide and/or up to 35% with zinc oxide and/or with fluorine since the F/Sn ratio is between 0.15 and 0.30, and cadmium oxide doped up to 35% with stannous oxide.

4. Process for the preparation of a composite multilayer product with selective optical properties as in claim 3, in which coatings with a composition chosen from the following are deposited: indium oxide doped with 10% stannous oxide, indium oxide doped with cadmium oxide, zinc oxide doped with 2% aluminium oxide, zinc oxide doped with indium oxide, stannous oxide doped with approximately 3% antimony oxide, stannous oxide doped with percentages of zinc oxide from 10 to 35%, stannous oxide doped with fluorine according to a ratio F/Sn = 0.25, and cadmium oxide doped with 33% stannous oxide.

5. Process for the preparation of a composite multilayer product with selective optical properties as in claim 1, in which said low density structural material is chosen from the group comprising aluminium, aluminium alloys, titanium, titanium alloys, composite products with polymeric matrix, composite products with carbon fibres.

6. Process for the preparation of a composite multilayer product with selective optical properties as in claim 5, in which the composite product with carbon fibre is of the type C-C or C-SiC.

7. Process for the preparation of a composite multilayer product with selective optical properties as in claim 1, in which the material with low density and/or high thermal resistance is a composite product with carbon fibres.

8. Process for the preparation of a composite multilayer product with selective optical properties as in claim 7, in which the composite product with carbon fibres is of the type C-C or C-SiC.

9. Process for the preparation of a composite multilayer product with selective optical properties as in claim 1, in which the structural material with high thermal resistance is chosen from the group comprising steel and superalloys of nickel and cobalt.

10. Process for the preparation of a composite multilayer product with selective optical properties as in claim 1, in which at least one intermediate layer is deposited between the base and the doped semiconductor oxide coating.

11. Process for the preparation of a composite multilayer product with selective optical properties as in claim 10, in which at least one intermediate layer is deposited chosen from the group comprising metals, such as titanium, nickel, aluminium, chromium, iron, cobalt, silicon, yttrium and their respective alloys, oxides of metals such as indium, cadmium, zinc, tin, aluminium, titanium and tungsten, if necessary doped with elements such as tin, aluminium, antimony and fluorine, and combinations of said metals and oxides.

FIG. 1

FIG. 2

(a)

(b)

FIG. 3

FIG. 4

FIG. 5

FIG. 6

FIG. 7

Fig. 8

# EP 1 428 899 A1

**European Patent Office**

## EUROPEAN SEARCH REPORT

Application Number

EP 03 02 8411

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2002/020024 A1 (WERNER SCHMITZ) 21 February 2002 (2002-02-21) * page 2, column 1, line 1 - line 14 * *, sentence 28 - column 2, line 2 * * claims 2,7,9 * | 1,2 | C23C4/10 C23C28/00 |
| Y | GB 2 309 230 A (ATRAVERDA) 23 July 1997 (1997-07-23) * page 3, line 4 - line 11; claims 1,2,5,13 * | 1 | |
| A | | 5,10,11 | |
| Y | DE 41 15 663 A (LEYBOLD) 19 November 1992 (1992-11-19) * claims 1,9 * | 1 | |
| A | | 2-4 | |
| A | PATENT ABSTRACTS OF JAPAN vol. 2000, no. 01, 31 January 2000 (2000-01-31) & JP 11 269638 A (SUMITOMO METAL MINING CO LTD), 5 October 1999 (1999-10-05) * abstract * | 1-4 | |
| A | US 5 567 490 A (HAROLD A. PAPAZIAN) 22 October 1996 (1996-10-22) * column 3, line 19 - line 22 * *, sentence 41 - sentence 52; claim 1 * | 1,5,9,10 | TECHNICAL FIELDS SEARCHED (Int.Cl.7) C23C |
| A | EP 0 286 135 A (SUMITOMO ELECTRIC INDUSTRIES) 12 October 1988 (1988-10-12) * page 3, column 3, line 4 - line 11 * * column 3, line 28 - column 4, line 15; claim 1 * | 1,5 | |
| A | US 6 379 789 B1 (CHRISTOPHER J. CROWLEY) 30 April 2002 (2002-04-30) * column 5, line 30 - column 6, line 22; claims 21,25,29 * | 1,5,10 | |

-/--

The present search report has been drawn up for all claims

| Place of search | Date of completion of the search | Examiner |
|---|---|---|
| THE HAGUE | 12 March 2004 | Elsen, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 02 8411

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | OSBOND P: "PLASMA SPRAYED ANTI-REFLECTION COATINGS FOR MICROWAVE OPTICAL COMPONENTS**" ADVANCED MATERIALS, VCH VERLAGSGESELLSCHAFT, WEINHEIM, DE, vol. 4, no. 12, 1 December 1992 (1992-12-01), pages 807-809, XP000331611 ISSN: 0935-9648 * page 809, column 2 * | 1 | |
| A | EP 1 069 072 A (OTSUKA CHEMICAL COMPANY) 17 January 2001 (2001-01-17) * claim 1 * | 5 | |
| A | PATENT ABSTRACTS OF JAPAN vol. 1998, no. 04, 31 March 1998 (1998-03-31) & JP 09 324253 A (ISHIKAWAJIMA HARIMA HEAVY IND CO LTD), 16 December 1997 (1997-12-16) * abstract * | 1 | |
| A | PATENT ABSTRACTS OF JAPAN vol. 014, no. 584 (E-1018), 27 December 1990 (1990-12-27) & JP 02 254798 A (MATSUSHITA ELECTRIC IND CO LTD), 15 October 1990 (1990-10-15) * abstract * | 1 | TECHNICAL FIELDS SEARCHED (Int.Cl.7) |

The present search report has been drawn up for all claims

| Place of search | Date of completion of the search | Examiner |
|---|---|---|
| THE HAGUE | 12 March 2004 | Elsen, D |

EPO FORM 1503 03.82 (P04C01)

## ANNEX TO THE EUROPEAN SEARCH REPORT
## ON EUROPEAN PATENT APPLICATION NO.

EP 03 02 8411

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2004

| Patent document cited in search report | | Publication date | Patent family member(s) | | Publication date |
|---|---|---|---|---|---|
| US 2002020024 | A1 | 21-02-2002 | DE | 10015555 A1 | 18-10-2001 |
| | | | EP | 1138788 A1 | 04-10-2001 |
| GB 2309230 | A | 23-07-1997 | AU | 1451497 A | 20-08-1997 |
| | | | CA | 2244158 A1 | 31-07-1997 |
| | | | CN | 1212025 A | 24-03-1999 |
| | | | WO | 9727344 A1 | 31-07-1997 |
| DE 4115663 | A | 19-11-1992 | DE | 4115663 A1 | 19-11-1992 |
| JP 11269638 | A | 05-10-1999 | NONE | | |
| US 5567490 | A | 22-10-1996 | US | 5476696 A | 19-12-1995 |
| EP 286135 | A | 12-10-1988 | CA | 1301564 C | 26-05-1992 |
| | | | EP | 0286135 A2 | 12-10-1988 |
| | | | JP | 1086414 A | 31-03-1989 |
| | | | JP | 2573650 B2 | 22-01-1997 |
| US 6379789 | B1 | 30-04-2002 | NONE | | |
| EP 1069072 | A | 17-01-2001 | JP | 2978146 B2 | 15-11-1999 |
| | | | JP | 11278826 A | 12-10-1999 |
| | | | CA | 2325582 A1 | 07-10-1999 |
| | | | EP | 1069072 A1 | 17-01-2001 |
| | | | WO | 9950179 A1 | 07-10-1999 |
| JP 09324253 | A | 16-12-1997 | NONE | | |
| JP 02254798 | A | 15-10-1990 | NONE | | |

EPO FORM P0459

For more details about this annex : see Official Journal of the European Patent Office, No. 12/82